(19) Europäisches Patentamt / European Patent Office / Office européen des brevets

(11) **EP 2 171 041 B1**

(12) **EUROPEAN PATENT SPECIFICATION**

(45) Date of publication and mention of the grant of the patent:
**06.01.2016 Bulletin 2016/01**

(21) Application number: **08768691.1**

(22) Date of filing: **20.06.2008**

(51) Int Cl.:
***A01N 37/42*** *(2006.01)* ***A01P 21/00*** *(2006.01)*

(86) International application number:
**PCT/US2008/007766**

(87) International publication number:
**WO 2008/156863 (24.12.2008 Gazette 2008/52)**

(54) **EXTENSION OF POLLINATION PERIOD**

VERLÄNGERUNG DES BESTÄUBUNGSZEITRAUMS

PROLONGEMENT DE LA PÉRIODE DE POLLINISATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.06.2007 US 936497 P**

(43) Date of publication of application:
**07.04.2010 Bulletin 2010/14**

(73) Proprietor: **Valent Biosciences Corporation**
**Libertyville**
**Illinois 60048 (US)**

(72) Inventors:
- **WILSON, Dale, O., Jr.**
  **Round Lake Beach, IL 60073 (US)**
- **HIGGS, Nicole**
  **Racine, WI 53403 (US)**
- **FUGIEL, Judith**
  **Lake Villa, IL 60046 (US)**
- **PETRACEK, Peter, D.**
  **Grayslake, IL 60030 (US)**
- **WARRIOR, Prem**
  **Bothell, WA 98012 (US)**

(74) Representative: **Brearley, Helen Rebecca**
**Elkington and Fife LLP**
**Prospect House**
**8 Pembroke Road**
**Sevenoaks**
**Kent TN13 1XR (GB)**

(56) References cited:
**WO-A2-02/77163** **US-A- 5 173 106**
**US-A1- 2004 103 451** **US-A1- 2006 179 518**
**US-B1- 6 331 504**

- **DATABASE CA [Online] CHEMICAL ABSTRACTS SERVICE, COLUMBUS, OHIO, US; DE FOSSARD, R. A.: "Effects of CCC, ethrel, abscisic acid, abscisic aldehyde, and abscisic hydrocarbon on the development and flowering of Chenopodium rubrum", XP002663812, retrieved from STN Database accession no. 79:88210 & DE FOSSARD, R. A.: "Effects of CCC, ethrel, abscisic acid, abscisic aldehyde, and abscisic hydrocarbon on the development and flowering of Chenopodium rubrum", BOTANICAL GAZETTE (CHICAGO) , 134(2), 103-17 CODEN: BOGAA5; ISSN: 0006-8071, 1973,**
- **DATABASE CA [Online] CHEMICAL ABSTRACTS SERVICE, COLUMBUS, OHIO, US; SLUCHEVSKAYA, S. L. ET AL: "Regulation of the growth and flowering of tall and dwarf varieties of peas by presowing seed treatment", XP002663813, retrieved from STN Database accession no. 90:34907 & SLUCHEVSKAYA, S. L. ET AL: "Regulation of the growth and flowering of tall and dwarf varieties of peas by presowing seed treatment", DOKLADY AKADEMII NAUK SSSR , 243(1), 268-71 [PLANT PHYSIOL.] CODEN: DANKAS; ISSN: 0002-3264, 1978,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 171 041 B1

## Description

### FIELD OF THE INVENTION

The present invention is directed to improving the synchronization of flowering of inbred varieties in hybrid seed production by delaying germination and growth of the treated seed, so that the treated parental variety flowers later and coincidentally with the other, later-flowering parental variety.

### BACKGROUND OF THE INVENTION

The hybrid seed production system requires the planting of two parental lines or varieties and the controlled cross-pollination of these parents in the seed production field. Very often it is necessary to plant the two parents on different dates, or to make multiple plantings of the pollen parent to achieve adequate pollen during flowering (Wych, 1988 In: Corn and Corn Improvement, Third Edition, 1988). The need for multiple planting dates and the possibility of delay in follow-up plantings due to unfavorable weather increases the risk and cost of hybrid seed production.

Besides split-planting, traditional solutions to this problem include cutting and/or flaming a portion of the parent plants needing delay, to stunt, and set back the seedlings. These cutting and flaming operations, and highway transport of the equipment constitute one of the most dangerous operations in the production of hybrid corn seed.

Another solution is coating the seed of the parent to be delayed with a polymer that restricts water uptake (Landec "Pollinator Plus"). Pollinator Plus is difficult to apply and interacts unpredictably with soil water content. Application of Pollinator Plus is also not practical with seeds that are smaller than corn, such as sorghum and rice. Thus, there is a need to provide a more effective and convenient method of delaying flowering of inbred parents for hybrid seed production.

S-(+)- abscisic acid (ABA) is a plant hormone that is found in all photosynthetic organisms (Cutler and Krochko, 1999; Finkelstein and Rock, 2002). ABA is involved in many major events of plant growth and development including dormancy, germination, bud break, flowering, fruit set, general growth and development, stress tolerance, ripening, abscission and senescence.

De Fossard (Botanical Gazette (Chicago) (1973), 134(2), 103-17) describes the effects of CCC, ethrel, abscisic acid, abscisic aldehyde, and abscisic hydrocarbon on the development and flowering of Chenopodium rubrum.

Sluchevskaya (Doklady Akademii Nauk SSSR (1978), 243(1), 268-71 [Plant Phsiol.]) describes the regulation of the growth and flowering of tall and dwarf varieties of peas by presowing seed treatment with abscisic acid.

US 2006/0179518 A1 describes proteins having binding sites for abscisic acid (ABA) and methods of use thereof.

US 5173106 describes a composition for inhibiting flowering of plants and a composition for prolonging the duration of flowering. The compositions comprise S-(+)-abscisic acid as an effective ingredient.

However, the use of ABA to delay pollen-shed has not been previously considered or evaluated.

### SUMMARY OF THE INVENTION

The present invention is directed to a method of delaying the flowering of corn and canola plants used as parents in hybrid seed production as defined in claim 1 below.

### DETAILED DESCRIPTION OF THE INVENTION

The present invention is directed to inhibiting growth and delaying emergence from the soil of plants used as parents in hybrid seed production. The treatment comprises applying effective but non-phytotoxic amounts of the S-abscisic acid (ABA; S-ABA; CAS no. 21293-29-8) and/or ABA analogs. The treatment may also comprise applying effective but non-phytotoxic amounts of ABA and/or ABA analogs in combination with polymer seed coatings.

The present invention is directed to the improvement of hybrid seed yield and genetic purity in seed production fields.

The present invention is directed to use on crops for the production of hybrid seed of field corn, sweet corn, and canola.

The natural compound has been indicated as (S) or (+), its synthetic or racemic substance as (RS) or (+/-), and its enantiomer as (-). ABA in its natural form (+), its synthetic or racemic forms, enantiomers, mixtures of forms and derivatives may all be used according to the present invention.

ABA analogs are PBI-429, PBI-702 and PBI-488.

The abscisic acid analogs are represented by Structures 1, 2, and 3, wherein for Structure 1:

the stereochemistry of the alcoholic hydroxyl group is S-, R- or an R,S-mixture,
the stereochemistry of the $R_1$ group is in a cis- relationship to the alcoholic hydroxyl group,

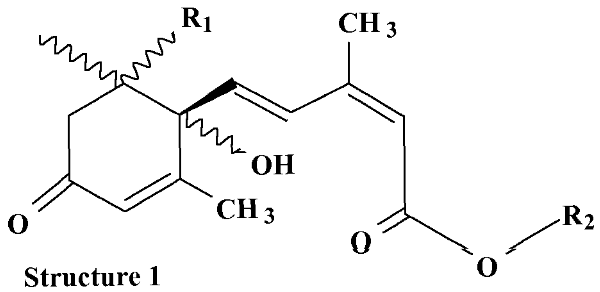

Structure 1

The compound of structure 1 is PBI-429 where $R_1$ is ethynyl and $R_2$ is a methyl group.
For Structure 2:

the stereochemistry of the alcoholic hydroxyl group is S-, R- or an R,S-mixture.

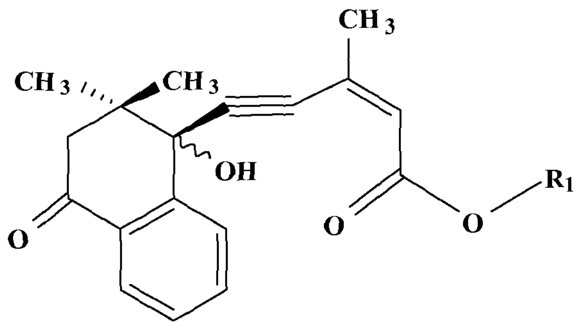

Structure 2

The compound of structure 2 is PBI-702 where $R_1$ is a methyl group.
For Structure 3:

the stereochemistry of the alcoholic hydroxyl group is S-, R- or an R,S-mixture.

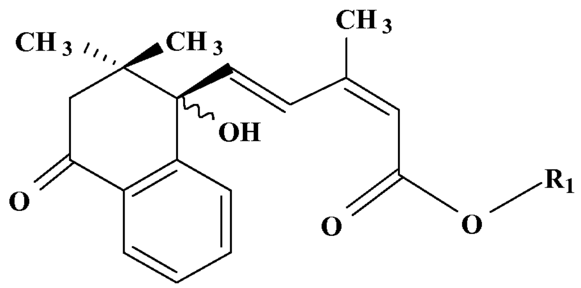

Structure 3

The compound of structure 3 is PBI-488 where $R_1$ is a methyl group.
It is also contemplated that salts of the ABA may be utilized in accordance with the present invention.

Depending on species and the amount of delay needed, the amount of ABA applied to seeds can vary within wide ranges and is generally in the range of about 5 grams to 200 grams per 45.4 kg (100 pounds) of seed. Applications made to seedlings may range from 100 to 10,000 ppm depending on the application volume and amount of flowering delay needed.

Techniques of seed treatment application are well known to those skilled in the art, and they may be readily used in the context of the present invention. The compositions of the present invention may be applied as a slurry or soak. Film coating and encapsulation may also be used. The coating processes are well known in the art and employ the techniques of film coating, encapsulation, immersion, etc. The methods of application of the compositions of the present invention may be varied, and the invention is intended to include any technique that is to be used by one of skill in the art.

In one embodiment, the invention relates to a method of delaying the flowering of a plant comprising applying an effective amount of S-(+)-abscisic acid or an analog thereof, to a seed of said plant.

Analogs are PBI-429, PBI-702 and PBI-488.

Said effective amount is from 0.5 ± 10% grams to 200 ± 10% grams per 45.4 kg (100 pounds) of seed.

Methods of the present invention result in an increase of a thermal time (Growing-Degree-Days or GDD) of a plant.

In a preferred embodiment, methods of the present invention result in delay of seed emergence from the soil.

As used herein, all numerical values relating to amounts, weight percentages and the like are defined as "about" or "approximately" each particular value, plus or minus 10%. For example, the phrase "at least 5.0% by weight" is to be understood as "at least 4.5% to 5.5% by weight." Therefore, amounts within 10% of the claimed values are encompassed by the scope of the claims.

Throughout the application, the singular forms "a," "an," and "the" include plural reference unless the context clearly dictates otherwise.

The following examples are intended to illustrate the present invention and to teach one of ordinary skill in the art how to make and use the invention.

## EXAMPLES

Example 1: Effect of ABA and ABA analogs and derivatives on germination of sweet corn.

Method

ABA acid and three analogs were dissolved in ethanol to produce the desired doses. Table 1 shows the agents and doses. Aliquotes (250 μl) of ethanol solutions of the agents were added to 10g samples of the seed and the seeds were agitated and dried overnight. Germination tests were conducted on moist blotters at 15°C in petri dishes. Four replications of 10 seeds each were performed.

Radicle and coleoptile protrusion were counted approximately daily for 27 days. The maximum radicle protrusion (RGERM) and maximum coleoptile protrusion (CGERM) were expressed as percentages from each dish. The daily counts were expressed as proportions of the protrusion maxima from each dish, and Gompertz curves were fitted to the protrusion data using SAS Proc NLIN. From the parameters of the models, median time to radicle protrusion (RT50), and median-time-to-coleoptile protrusion (CT50) were estimated for each dish. Analysis of variance was performed and means calculated for each of the four responses (RGERM, CGERM, RT50 and CT50).

Results

Table 1. Effect of ABA and ABA analog (PBI-429, PBI-488, and PBI-702) applied to sweet corn seed (cv. Silver Queen) on germination on blotters at 15° C (dose of 1 ppm equals 1 microgram per 1 gram of seed).

| | | Radicle protrusion | | Coleoptile protrusion | |
|---|---|---|---|---|---|
| Agent | Dose (ppm) | RGERM (%) | RT50 (days) | CGERM (%) | CT50 (days) |
| Blank | 0 | 87.5 | 5.43 | 85.0 | 8.30 |
| ABA | 10 | 87.5 | 5.99 | 80.0 | 9.70 |
| ABA | 100 | 77.5 | 7.28 | 65.0 | 12.80 |
| ABA | 1000 | 85.0 | 8.58 | 22.5 | 18.44 |
| PBI-429 | 10 | 70.0 | 5.60 | 67.5 | 10.37 |
| PBI-429 | 100 | 87.5 | 5.67 | 75.0 | 11.18 |
| PBI-429 | 1000 | 82.5 | 6.94 | 57.5 | 14.67 |
| PBI-488 | 10 | 97.5 | 5.19 | 95.0 | 9.04 |
| PBI-488 | 100 | 90.0 | 6.39 | 77.5 | 12.27 |
| PBI-702 | 10 | 75.0 | 5.89 | 75.0 | 9.70 |

(continued)

| Table 1. Effect of ABA and ABA analog (PBI-429, PBI-488, and PBI-702) applied to sweet corn seed (cv. Silver Queen) on germination on blotters at 15° C (dose of 1 ppm equals 1 microgram per 1 gram of seed). | | | | | |
|---|---|---|---|---|---|
| | | Radicle protrusion | | Coleoptile protrusion | |
| Agent | Dose (ppm) | RGERM (%) | RT50 (days) | CGERM (%) | CT50 (days) |
| PBI-702 | 100 | 95.0 | 6.63 | 82.5 | 10.23 |

Table 1 shows the maximum protrusion percentages by day 27, and the median number of days to protrusion, among those seedlings that exhibited protrusion of the organ. The data are right-censored and the low protrusion percentages at high doses cannot be taken as evidence of mortality.

Every agent exhibited increasing delay in median time to protrusion (T50) of the radicle and, especially, the coleoptile. The degree of the coleoptile delay suggested that these treatments could be used to delay emergence of corn.

Example 2: Effect of different forms of ABA on emergence delay of corn seed in soil.

Background

Commercial seed treatment is performed by spraying a small volume of aqueous slurry onto the seeds just prior to bagging. New ingredients must be compatible with this system. The slurry usually includes a fungicide, a film forming polymer and a colorant. The process is simulated in the laboratory by preparing small samples of slurry, and spraying them onto the seed in a laboratory-scale seed-coating machine. The purpose of the experiment described under Example 2 was to evaluate the effect of different forms of abscisic acid on germination delay of hybrid corn seed when applied in a manner that simulates commercial practice.

Method

Three forms of ABA were evaluated in this experiment 1) free acid, 2) ammonium salt, and 3) sodium salt. The cation is referred to as the "counter-ion" below. The experiment was set up as an ABA dose x Counter-ion factorial experiment, with two dose levels of ABA (0.25 g/cwt) and three counter-ions (H+, NH4+, Na+) for a total of six treatments. The treatments were made up in 3 ml samples of experimental aqueous seed treatment slurry. All of the seed treatment slurry samples contained CF-Clear film-forming agent and Colorcoat Red (Becker Underwood), each at 28.35 g/cwt (1 oz/cwt), and 4.73 g/cwt (0.167 oz/cwt) Maxim XL fungicide (Syngenta). The slurry application volume was 567 g/cwt (20 oz/cwt) (cwt= 45.4 kg (100 lbs) of seed).

One hundred gram samples of Hughes 1883 hybrid corn seed were treated with the experimental slurries using a Hege 11 seed treater with a six-inch bowl.

The seed was planted in plastic boxes containing 1 kg of typical agricultural silt loam. Fifty seeds were planted 3 cm deep in each plastic box, and the soil in the box was adjusted to 21% soil moisture (wet-weight basis). Two replications of the experiment were incubated under constant light in a 25° C chamber and two replications incubated under constant light in an 18° C chamber. The boxes were watered up to the correct weight daily, and checked for emergence. Daily counts of seedlings were continued until emergence ceased. The final count of emerged seedlings was expressed as a percentage of the 50 seeds planted (GERM).

The daily counts were converted to proportions of the final germination of the box, and a Gompertz curve was fitted to the data from each box using SAS Proc NLIN. From the parameters of the model, median germination time (T50) and quartile range (QR) were estimated for each box. Analysis of variance was performed and means calculated for each of the three responses (GERM, T50, QR).

Results

| Table 2. Soil germination at 18 and 25° C after seed treatment with different forms of ABA at different doses. | | | | |
|---|---|---|---|---|
| ABA dose (g/cwt)* | Counter-ion | Final emergence (%) | T50 (days) | QR (days) |
| Soil germination at 18° C | | | | |
| 0 | None | 97 | 5.4 | 0.82 |
| 0 | Ammonium | 93 | 5.5 | 1.13 |
| 0 | Sodium | 95 | 5.3 | 0.74 |
| 25 | None | 97 | 11.4 | 2.96 |
| 25 | Ammonium | 91 | 11.2 | 3.52 |
| 25 | Sodium | 92 | 10.9 | 3.36 |
| Soil germination at 25° C | | | | |
| 0 | None | 89 | 3.0 | 0.26 |
| 0 | Ammonium | 94 | 3.0 | 0.46 |
| 0 | Sodium | 92 | 2.9 | 0.39 |
| 25 | None | 96 | 7.7 | 1.32 |
| 25 | Ammonium | 91 | 7.4 | 1.34 |
| 25 | Sodium | 92 | 7.1 | 1.31 |
| * As free acid. | | | | |

ABA increased median-time-to-germination ($p<0.0001$) and quartile range ($p<0.0002$), regardless of the counter-ion at 18 and 25° C (Table 2). The counter-ion had no effect on any of the responses ($p>0.2$), and the ABA/counter-ion interactions were not significant ($p>0.05$).

Germination of the control seed at 18° C rather than 25° C increased median-time-to-germination by 80%. Surprisingly, the delay produced by seed treatment with ABA was also regulated by temperature. Treatments with ABA resulted in 5.8 days of delay at 18° C, and 4.4 days of delay at 25° C. Expressed as a fraction of the germination time of the control at the same temperature, ABA produced a consistent delay, roughly doubling the time to emergence.

In conclusion, treatment of corn seed with ABA produced a predictable and consistent emergence delay in laboratory soil tests. It did not matter whether the ABA was presented in the form of the free acid or in the form of sodium or ammonium salt. The delay produced was greater at lower temperature, an effect mirroring the natural temperature responsiveness of corn. This proportional reaction to temperature is crucial to utility as a delay agent in hybrid corn seed production. All of the forms of ABA were compatible with representative seed treatment slurry.

Example 3: Dose-response to ABA seed treatment in thermal time.

Background

Because corn germination and phenology is driven by heat, the corn seed industry uses thermal time (Growing-Degree-Days, or GDD) rather than calendar time to measure and predict flowering. The standard formula for calculating the GDD contribution from one calendar day for corn is:

$$GDD = \frac{(\text{Max temp}) - (\text{Min temp})}{2} - 50$$

where "Max temp" is either the high temperature for the day or 86, whichever is lower, and "Min temp" is either the low temperature for the day in F or 50, whichever is higher.

In growth chambers at constant temperature the calculation is trivial. For example, in our nominally 25° C

chamber, the soil temperature is actually about 26.1° C (79F) due to the heat contribution of the light. This time corresponds to 29 GDD. It is important to examine the behavior of ABA in terms of GDD to demonstrate utility for the seed industry. The purpose of this experiment was to evaluate the dose response of corn seed emergence after seed treatment with ABA in terms of thermal time.

Method

ABA was applied at 0, 1, 2, 3, 4, 5, 10, 15, 20 and 25 g/cwt as the free acid in experimental seed treatment slurries as described under Example 1. The seed lot was designated as "Hughes High" and was a commercial hybrid.

The seed was planted in soil in plastic boxes as described under Example 2, and incubated at 25° C and 18° C as described under Example 2. Emergence was counted every 1-2 days and the data reduced as described under Example 2. The daily heat unit contribution was calculated for the two chambers, and the responses examined in cumulative thermal time as well as calendar time.

Results

Table 3. Soil emergence of corn after treatment with ABA free acid at different doses.

| ABA dose (g/cwt) | Responses from 18° C soil tests | | | Responses from 25° C soil tests | | |
|---|---|---|---|---|---|---|
| | Emergence (%) | Delay (days) | Delay (GDD) | Emergence (%) | Delay (days) | Delay (GDD) |
| 0 | 93.0 | 8.1 | 0 | 91.2 | 0 | 0 |
| 1 | 94.2 | -0.3 | -4 | 97.1 | 0.4 | 10 |
| 2 | 91.2 | -0.4 | -6 | 95.5 | 0.6 | 17 |
| 3 | 94.0 | -0.1 | 10 | 92.1 | 1.0 | 30 |
| 4 | 89.2 | 2.4 | 39 | 96.3 | 1.0 | 30 |
| 5 | 92.0 | 3.2 | 53 | 95.0 | 1.5 | 44 |
| 10 | 94.0 | 4.9 | 80 | 89.0 | 2.4 | 72 |
| 15 | 92.1 | 5.2 | 85 | 96.3 | 2.9 | 90 |
| 20 | 90.1 | 5.7 | 93 | 95.0 | 3.4 | 105 |
| 25 | 88.1 | 7.3 | 119 | 97.1 | 3.9 | 119 |

As shown in Table 3, ABA delayed emergence progressively as the dose was increased. The delay expressed in days, was much greater at 18° C than at 25° C. When the delay was expressed as thermal time (GDD), the delays produced at 18° C and 25° C were virtually the same.

In conclusion, ABA seed treatment progressively delayed the emergence of corn seedlings as dose was increased. The delay in calendar time was greater at lower temperature. But when the delay was expressed in thermal time, as Com-Growing-Degree-Days (GDD) the response to dose at 25° C and 18° C was virtually identical. This demonstrates the utility of ABA seed treatment for adjusting the timing of seed emergence in corn seed production fields because the seed industry uses corn GDDs to predict flowering date and manage production logistics.

Reference Example 4. Effect of ABA seed treatment on emergence of sorghum inbreds Method

Seed of four commercial inbred sorghum lines were obtained from a genetics supplier. These inbreds are representative of many male parents used in hybrid sorghum seed production. ABA in the form of the free acid was applied at rates of 0, 10, 25, 50 and 100 g/cwt. Application was performed as described under Example 2 above, except the Maxim XL (Syngenta) was applied at 9.47 g/cwt (0.334 oz/cwt), Allegiance FL (Bayer), was applied at 21.26 g/cwt (0.75 oz/cwt), and Thiram 42-S (Bayer) was applied at 99.23 g/cwt (3.5 oz/cwt), using a slurry rate of 708.75 g/cwt (25 oz/cwt).

The seed was planted in soil in plastic boxes as described under Example 2, except at a depth of 2 cm., and incubated at 20/30° C (AOSA Rules for Testing Seeds, 2005). Emergence was counted every 1-3 days and the data

reduced as described under Example 2.

Results

| Table 4. Emergence of commercial sorghum inbreds after seed treatment with ABA | | | | |
|---|---|---|---|---|
| Inbred | ABA dose (g/cwt) | Emergence (%) | Median time to emergence (days) | Quartile range (days) |
| 43 | 0 | 96.0 | 2.3 | 0.5 |
| 43 | 10 | 94.0 | 5.1 | 1.5 |
| 43 | 25 | 94.2 | 6.3 | 2.2 |
| 43 | 50 | 87.2 | 8.6 | 3.7 |
| 43 | 100 | 87.9 | 11.3 | 4.8 |
| 44 | 0 | 92.1 | 2.7 | 0.8 |
| 44 | 10 | 79.0 | 5.7 | 2.6 |
| 44 | 25 | 73.2 | 8.4 | 3.2 |
| 44 | 50 | 71.3 | 10.7 | 4.6 |
| 44 | 100 | 49.0 | 14.4 | 4.7 |
| 45 | 0 | 97.1 | 2.8 | 0.8 |
| 45 | 10 | 81.3 | 5.4 | 1.5 |
| 45 | 25 | 77.1 | 7.3 | 3.1 |
| 45 | 50 | 54.1 | 10.6 | 3.5 |
| 45 | 100 | 25.0 | 14.9 | 6.7 |
| 46 | 0 | 90.4 | 2.5 | 0.6 |
| 46 | 10 | 89.2 | 5.7 | 2.6 |
| 46 | 25 | 86.1 | 7.0 | 3.0 |
| 46 | 50 | 86.2 | 8.8 | 3.9 |
| 46 | 100 | 75.1 | 11.4 | 5.0 |

As shown in Table 4, ABA progressively and significantly delayed emergence of sorghum inbreds as dose was increased.

Example 5. Delay of emergence and anthesis in field plantings of inbred corn seed treated with ABA

Method

Seed of inbred lines B91 and B95 was obtained from Iowa State University. These inbreds are from the BSCB1 heterotic group, and are representative of many male parents used in hybrid corn seed production. ABA in the form of the ammonium salt was applied at rates of 0, 25, 50 and 100 g/cwt (as free acid). Application was performed as described under Example 2 above, except the CF-Clear and Color Coat Red (Becker Underwood) were applied at 14.18 g/cwt (0.5 oz/cwt), and Maxim XL (Syngenta) was applied at 9.47 g/cwt (0.334 oz/cwt), using a slurry rate of 425.25 g/cwt (15 oz/cwt).

The seed samples were mechanically planted in small plots of one five hundredth acre each at Woodstock, IL, Stoughton, WI and Winnebago, IL. Three plots of each treatment were planted at each location. Standard cultural practices for corn production were used. The plots were examined daily, and seedling emergence counted in each plot every day or two during the month after planting. Data were analyzed as described under Example 2 above.

***Results***

| Table 5. Field emergence and pollen shed delay from planting of corn inbreds following seed treatment with ABA. | | | | | |
|---|---|---|---|---|---|
| Location | Inbred | ABA dose (g/cwt) | Final emergence (%) | Median time to emergence (days) | Median time to anthesis (days) |
| Woodstock | B91 | 0 | 97.2 | 10.3 | |
| Woodstock | B91 | 25 | 99.0 | 11.4 | |
| Woodstock | B91 | 50 | 94.5 | 13.7 | |
| Woodstock | B91 | 100 | 92.0 | 14.3 | |
| Woodstock | B95 | 0 | 98.3 | 11.2 | |
| Woodstock | B95 | 25 | 94.8 | 13.8 | |
| Woodstock | B95 | 50 | 96.8 | 15.3 | |
| Woodstock | B95 | 100 | 89.6 | 18.9 | |
| Stoughton | B91 | 0 | 99.4 | 11.0 | 78.5 |
| Stoughton | B91 | 25 | 96.2 | 11.9 | 79.2 |
| Stoughton | B91 | 50 | 95.0 | 12.6 | 80.1 |
| Stoughton | B91 | 100 | 94.3 | 14.1 | 79.8 |
| Stoughton | B95 | 0 | 94.7 | 11.5 | 80.7 |
| Stoughton | B95 | 25 | 98.1 | 12.5 | 81.8 |
| Stoughton | B95 | 50 | 98.1 | 14.1 | 82.4 |
| Stoughton | B95 | 100 | 99.0 | 14.3 | 81.3 |
| Winnebago | B91 | 0 | 95.7 | 8.1 | 73.8 |
| Winnebago | B91 | 25 | 98.5 | 8.8 | 74.4 |
| Winnebago | B91 | 50 | 96.4 | 9.7 | 75.1 |
| Winnebago | B91 | 100 | 94.4 | 11.5 | 76.4 |
| Winnebago | B95 | 0 | 96.4 | 9.2 | 78.3 |
| Winnebago | B95 | 25 | 94.8 | 10.3 | 79.8 |
| Winnebago | B95 | 50 | 95.0 | 11.3 | 79.5 |
| Winnebago | B95 | 100 | 89.8 | 12.7 | 80.8 |

As shown in Table 5, treatment with ABA resulted in a progressive and significant delay in emergence from the soil at every location. Said treatment also progressively delayed anthesis at Stoughton and Winnebago. Plants at the Woodstock site were blown down by a windstorm prior to anthesis. The treatments did not significantly reduce final stand at any of the locations.

## Claims

1. A method of delaying the flowering of corn or canola plants used as parents in hybrid seed production comprising applying an effective amount of S-(+)-abscisic acid or a salt thereof, PBI-429, PBI-702 or PBI-488 to seeds of said plants, wherein said effective amount is from 0.5 ±10% grams to 200 ±10% grams per 45.4 kg (100 pounds) of said seeds, wherein the delay improves synchronization of flowering and prolongation of the pollen-shed period of said plants, wherein said method results in an increase of thermal time in growing-degree-days to flowering of said plants and wherein PBI-429, PBI-702 and PBI-488 comprise the structures:

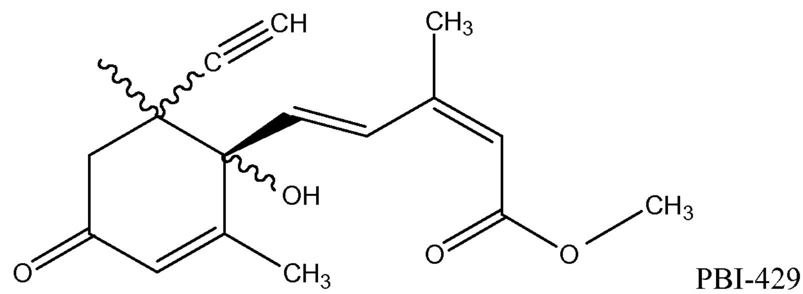

PBI-429

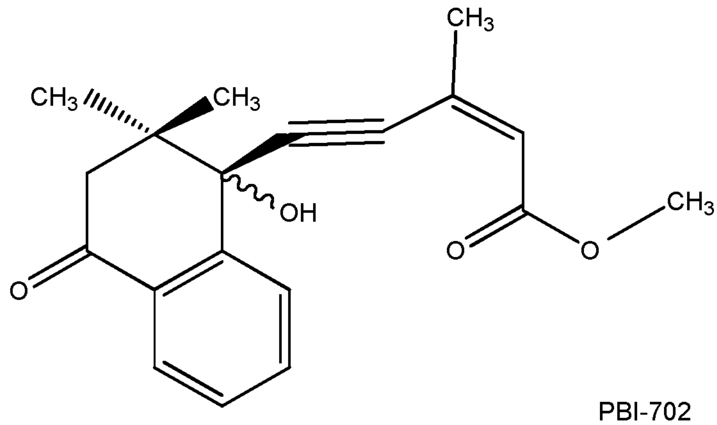

PBI-702

and

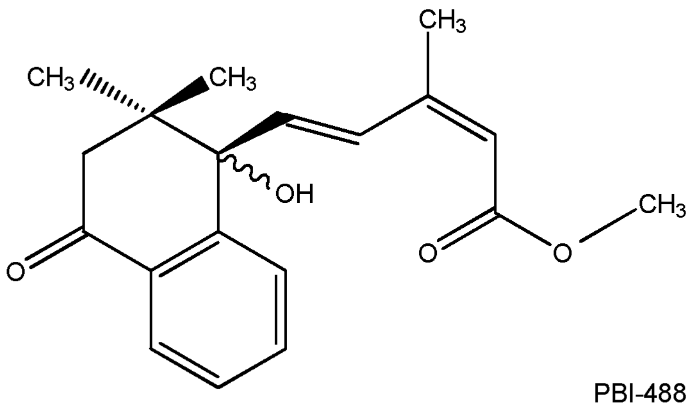

PBI-488 .

**2.** A method of improving yield or genetic purity of hybrid corn or canola seed comprising applying an effective amount of S-(+)-abscisic acid or a salt thereof, PBI-429, PBI-702 or PBI-488 to parent corn or canola seeds, wherein said effective amount is from 0.5 ±10% grams to 200 ±10% grams per 45.4 kg (100 pounds) of said seeds, wherein said method results in an increase of thermal time in growing-degree-days to flowering of plants from said seeds and wherein PBI-429, PBI-702 and PBI-488 comprise the structures:

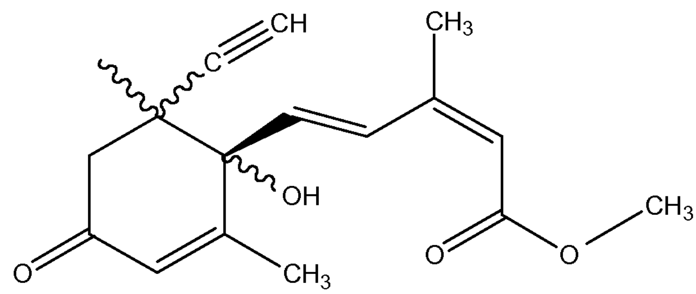

PBI-429

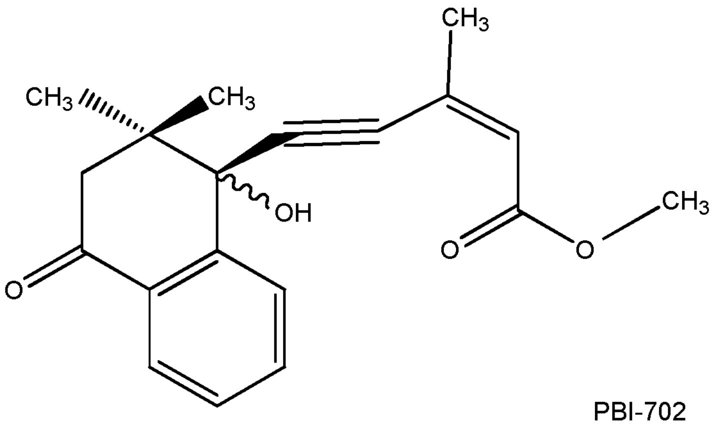

PBI-702

and

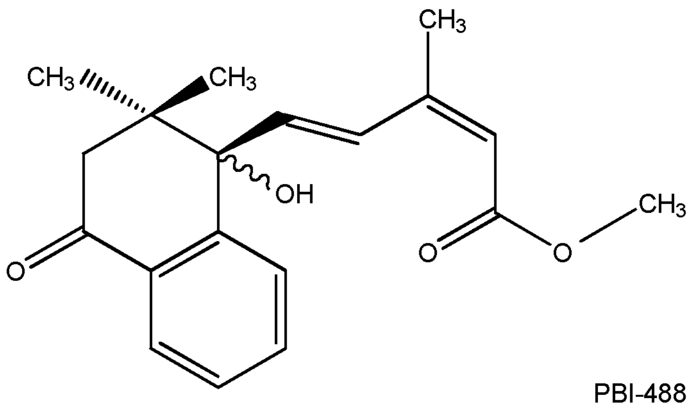

PBI-488 .

3. The method of claim 1 or 2, wherein said method is combined with polymer seed coatings.

4. The method of claim 1 or 2, wherein said method results in a field emergence delay of said plants.

**Patentansprüche**

1. Verfahren zur Verzögerung der Blütezeit von Getreide- oder Rapspflanzen, die als Eltern bei der Herstellung von Hybrid-Saatgut verwendet werden, umfassend das Anwenden einer wirksamen Menge von S-(+)-Abscisinsäure oder eines Salzes davon, PBI-429, PBI-702 oder PBI-488 für Saatgut der Pflanzen, wobei die wirksame Menge von 0,5 ± 10 % Gramm bis 200 ± 10 % Gramm pro 45,4 kg (100 Pfund) des Saatguts reicht, wobei die Verzögerung die Synchronisation der Blütezeit und die Verlängerung des Zeitraums für das Pollenstäuben der Pflanzen verbessert, wobei das Verfahren zu einer Zunahme der thermischen Zeit in Wachstumsgradtagen im Hinblick auf die Blütezeit der Pflanzen führt und wobei PBI-429, PBI-702 und PBI-488 die folgenden Strukturen umfassen:

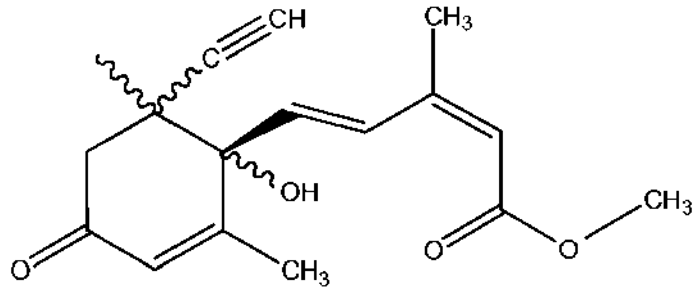

PBI-429

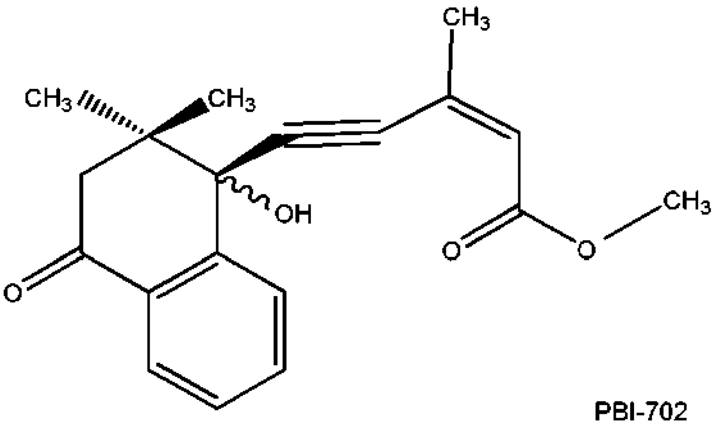

PBI-702

und

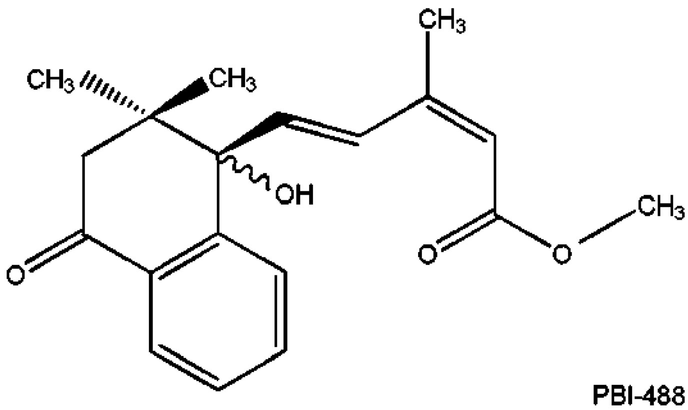

PBI-488.

2. Verfahren zur Verbesserung des Ertrags oder der genetischen Reinheit des Hybrid-Saatguts von Getreide oder Raps, umfassend das Anwenden einer wirksamen Menge von S-(+)-Abscisinsäure oder eines Salzes davon, PBI-429, PBI-702 oder PBI-488 für die Elternsaat von Getreide oder Raps, wobei die wirksame Menge von 0,5 ± 10 % Gramm bis 200 ± 10 % Gramm pro 45,4 kg (100 Pfund) des Saatguts reicht, wobei das Verfahren zu einer Zunahme der thermischen Zeit in Wachstumsgradtagen im Hinblick auf die Blütezeit der Pflanzen von den Samen führt und wobei PBI-429, PBI-702 und PBI-488 die folgenden Strukturen umfassen:

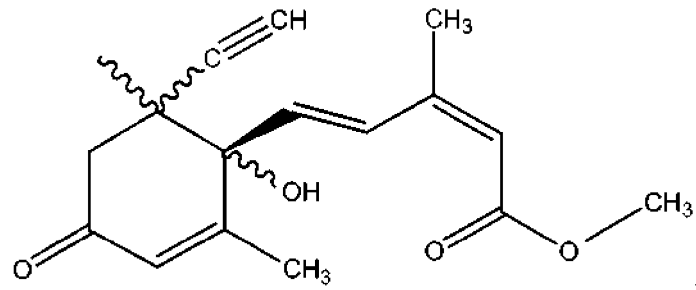

PBI-429

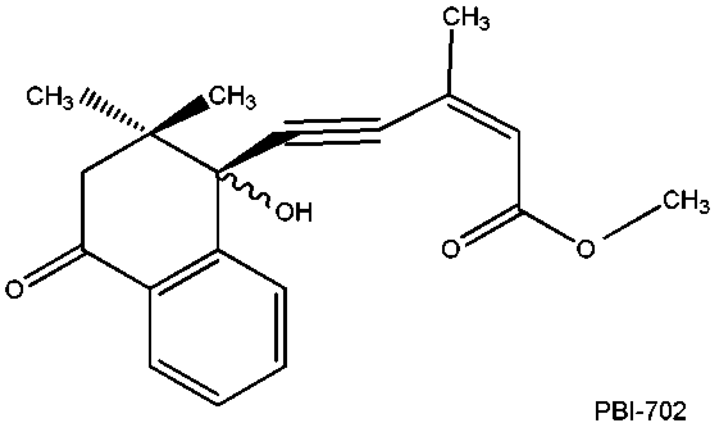

PBI-702

und

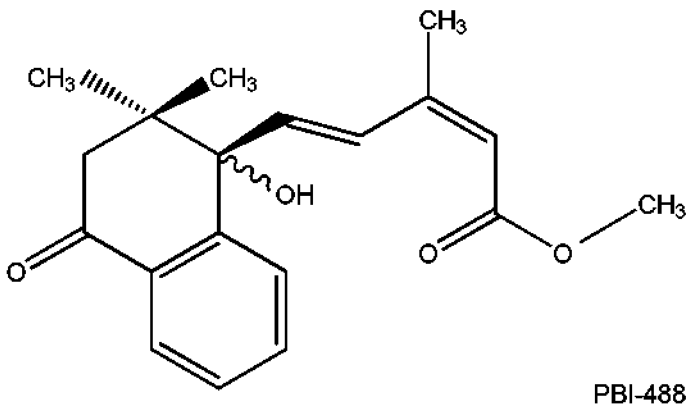

PBI-488.

3. Verfahren nach Anspruch 1 oder 2, wobei das Verfahren mit Polymersaatbeschichtungen kombiniert wird.

4. Verfahren nach Anspruch 1 oder 2, wobei das Verfahren zu einer Feldaufgangsverzögerung der Pflanzen führt.

**Revendications**

1. Procédé permettant de retarder la floraison des plantes de maïs ou de canola utilisées comme parents dans la production de semences hybrides comprenant l'application d'une quantité efficace d'acide S-(+)-abscissique ou d'un sel de celui-ci, de PBI-429, de PBI-702 ou de PBI-488 à des semences desdites plantes, ladite quantité efficace allant de 0,5 grammes ± 10 % à 200 grammes ± 10 % pour 45,4 kg (100 livres) desdites semences, ledit retardement améliorant la synchronisation de la floraison et du prolongement de la période de libération du pollen desdites plantes, ledit procédé entraînant une augmentation du temps thermique en degrés-jours de croissance pour faire fleurir lesdites plantes et PBI-429, PBI-702 et PBI-488 possédant les structures :

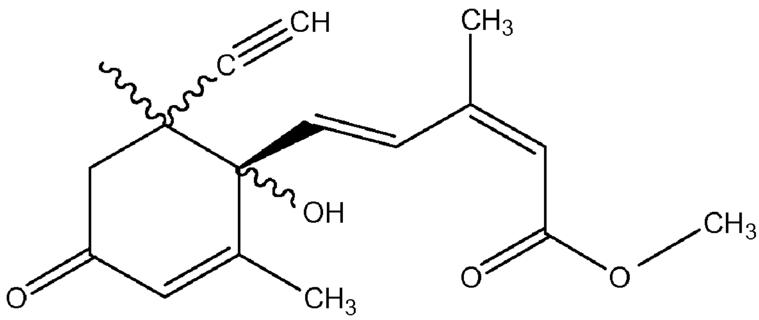

PBI-429

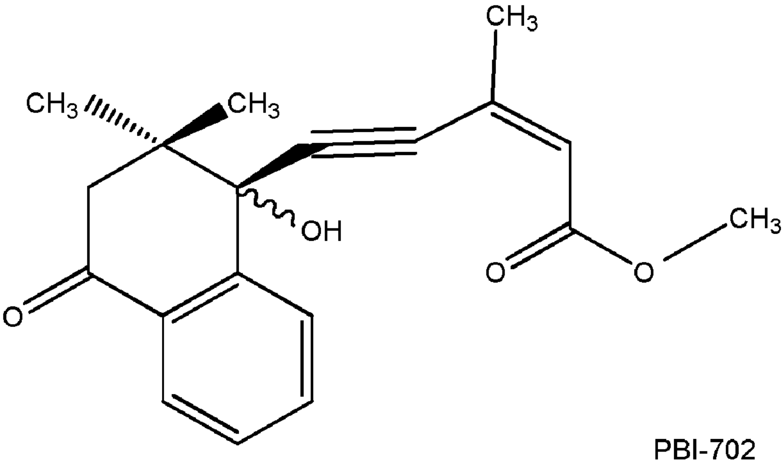

PBI-702

et

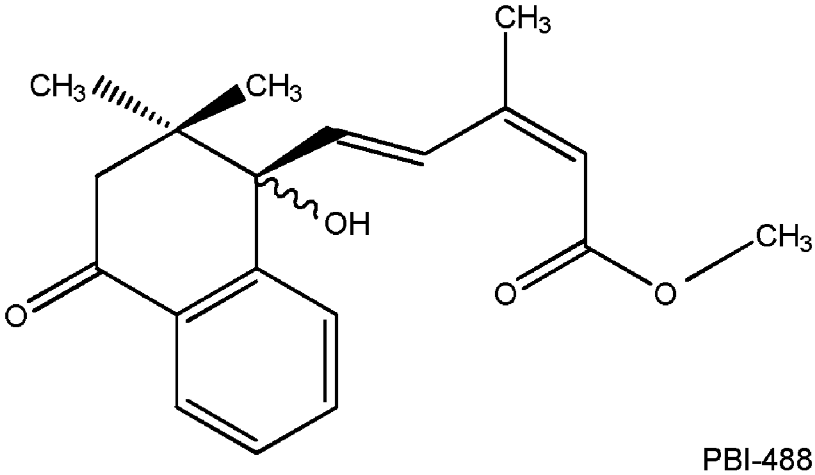

PBI-488.

**2.** Procédé permettant d'améliorer le rendement ou la pureté génétique de semences de maïs ou de canola hybrides comprenant l'application d'une quantité efficace d'acide S-(+)-abscissique ou d'un sel de celui-ci, de PBI-429, de PBI-702 ou de PBI-488 à des semences de maïs ou de canola parents, ladite quantité efficace allant de 0,5 grammes ± 10 % à 200 grammes ± 10 % pour 45,4 kg (100 livres) desdites semences, ledit procédé entraînant une augmentation du temps thermique en degrés-jours de croissance pour faire fleurir les plantes issues desdites graines et PBI-429, PBI-702 et PBI-488 possédant les structures :

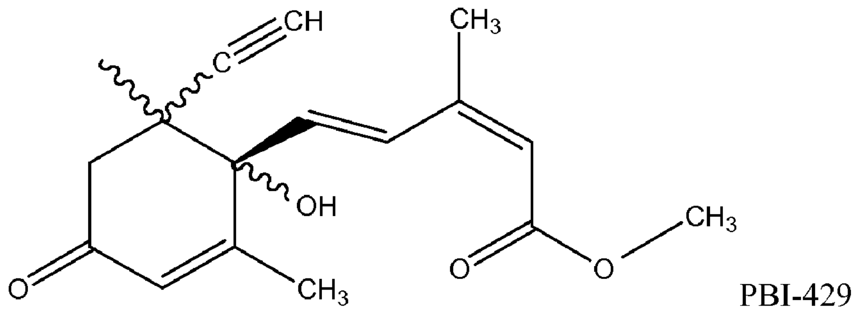

PBI-429

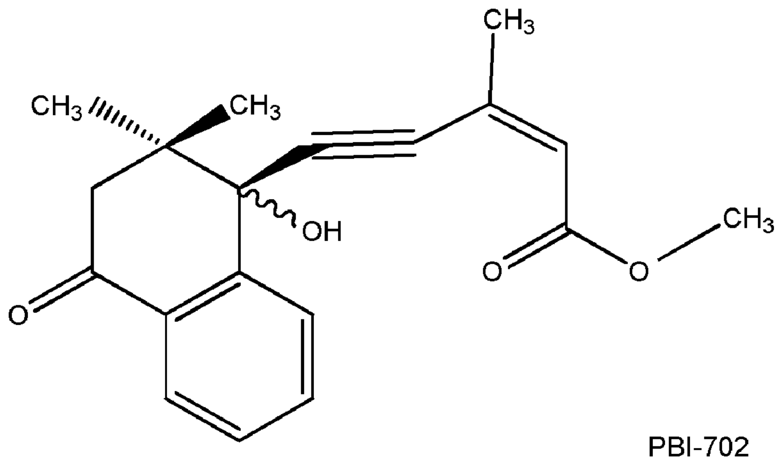

PBI-702

et

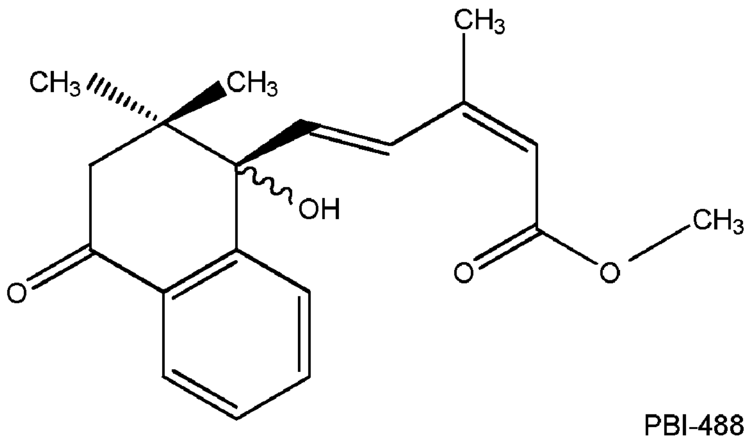

PBI-488 .

**3.** Procédé selon la revendication 1 ou 2, ledit procédé étant combiné à des enrobages polymères pour semences.

**4.** Procédé selon la revendication 1 ou 2, ledit procédé conduisant à un retard d'émergence en champ desdites plantes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060179518 A1
- US 5173106 A


### Non-patent literature cited in the description


- **WYCH.** Corn and Corn Improvement. 1988
- **DE FOSSARD.** *Botanical Gazette (Chicago),* 1973, vol. 134 (2), 103-17
- **SLUCHEVSKAYA.** Doklady Akademii Nauk SSSR. *Plant Phsiol.,* 1978, vol. 243 (1), 268-71